# EUROPÄISCHE PATENTSCHRIFT

(11) **EP 2 158 413 B1**
(45) Veröffentlichungstag und Bekanntmachung des Hinweises auf die Patenterteilung: **19.01.2011**
(21) Anmeldenummer: 08735398.3
(22) Anmeldetag: 28.04.2008
(51) Int. Cl.: F16D 13/64, F16D 13/72, F16D 25/12

(54) **KUPPLUNGSHAUPTNABE BZW. DOPPELKUPPLUNG MIT EINER DERARTIGEN KUPPLUNGSHAUPTNABE**
MAIN CLUTCH HUB, AND DOUBLE CLUTCH COMPRISING SUCH A MAIN CLUTCH HUB
MOYEU PRINCIPAL D'EMBRAYAGE ET DOUBLE EMBRAYAGE MUNI D'UN TEL MOYEU PRINCIPAL D'EMBRAYAGE

(30) Priorität: 13.06.2007 DE 102007027116
(43) Veröffentlichungstag der Anmeldung: 03.03.2010
(73) Patentinhaber: Volkswagen Aktiengesellschaft, 38436 Wolfsburg (DE)
(72) Erfinder: KOLZE, Fabian, 39179 Barleben (DE); ALBRECHT, Edmund, 38527 Meine (DE); PLOGMANN, Jörg, 34560 Fritzlar (DE); SCHMIDT, Andreas Dr., 32602 Vlotho (DE)
(86) Internationale Anmeldenummer: PCT/EP2008/003419
(87) Internationale Veröffentlichungsnummer: WO 2008/151694

(56) Entgegenhaltungen:
- WO-A-2008/062652
- WO-A-2008/092426
- AT-B- 386 870
- FR-A- 2 148 862
- FR-A- 2 871 209

## Beschreibung

Die Erfindung betrifft eine Kupplungshauptnabe, insbesondere für eine Kupplung eines Kraftfahrzeuges, vzw. für eine Doppelkupplung eines automatischen oder automatisierten Doppelkupplungsgetriebes zum Übertragen des Kraftflusses zwischen einer Motorwelle und mindestens einer Reibkupplung, wobei ein Nabenkörper vorgesehen ist. Ferner betrifft die Erfindung eine Doppelkupplung, insbesondere für ein Getriebe eines Kraftfahrzeuges, vzw. für ein automatisches oder automatisiertes Doppelkupplungsgetriebe, mit einem Kupplungsgehäuse, einer ersten und zweiten Reibkupplung, wobei die beiden Reibkupplungen einerseits mit einer Motorwelle und andererseits jeweils mit einer Getriebeeingangswelle verbindbar sind, mit einer im Kraftfluss zwischen der Motorwelle und den Reibkupplungen angeordneten Kupplungshauptnabe mit einem Nabenkörper.

Doppelkupplungen, insbesondere Doppelkupplungen für Doppelkupplungsgetriebe teilen das zu übertragende Drehmoment auf, nämlich auf zwei verschiedene Getriebeeingangswellen eines Doppelkupplungsgetriebes. Die vzw. mit der ersten Gangstufe der ersten Eingangswelle verbindbare erste Reibkupplung ist im Allgemeinen die thermisch höher belastete Kupplung, weil diese während des Anfahrens hier besonders entstehende Wärme abführen muss. Der Kraftfluss wird zwischen der Motorwelle und vzw. zwei nasslaufenden Reibkupplungen über bspw. ein Gehäuse und eine mit dem Gehäuse drehfest in Verbindung stehende Kupplungshauptnabe übertragen. Die Reibkupplungen werden vzw. mit Betätigungskolben hydraulisch geschlossen oder geöffnet, die auf einem Nabenkörper axial verschiebbar geführt sein können. Als Kupplungssysteme bieten sich nasslaufende Reibkupplungen mit einer oder mehreren Lamellen an. Die Anzahl der Lamellen wird jeweils in Abhängigkeit des Anwendungsfalles von Drehmoment und Wärmebelastung ausgewählt und angepasst. Die im Betrieb der Doppelkupplung entstehende Wärme kann mit einem Kühlmittel abgeführt werden. Bekannte Kupplungshauptnaben weisen einen zweiteiligen Nabenkörper auf. Bspw. kann das Kühlmittel durch einen Ringspalt in das Kupplungsgehäuse geleitet werden. Die zweiteiligen Nabenkörper können aus einem hohlzylindrischen Außenteil und einem hülsenförmigen, in das Außenteil einpressbaren Innenteil zusammengesetzt sein. Bei solchen zweiteiligen Ausgestaltungen muss das Außenteil am Innenumfang und das Innenteil am Außenumfang geschliffen werden, um das Innenteil winkelpositioniert einpressen zu können. Zur Kühlmittelleitung und zur Leitung von einem Druckmittel sind in das Innenteil sich in Axialrichtung erstreckende Nuten an dessen Außenumfang eingefräst. Diese Bearbeitungsprozesse sind sehr zeitaufwendig.

Aus der DE 100 60 882 A1 ist bspw. eine Kupplungshauptnabe mit einem zweiteiligen Nabenkörper bekannt. Der Nabenkörper besteht aus einem äußeren Hülsenteil und einem inneren Hülsenteil. Das innere Hülsenteil weist sich in Axialrichtung erstreckende Nuten an seinem Außenumfang und das Außenteil weist sich in Radialrichtung erstreckende Bohrungen auf. Durch die Bohrungen und die Nuten kann ein Hydraulikmittel in Betätigungskolben zugeordnete Arbeitsräume eingebracht werden. Die Betätigungskolben wirken bei Druckbeaufschlagung der Arbeitsräume auf jeweils eine Reibkupplung und schließen diese. Zur Kühlung der nasslaufenden Reibkupplungen wird Kühlöl zwischen dem Nabenkörper und einer äußeren Getriebeeingangswelle in einem Ringspalt in das Kupplungsgehäuse geleitet.

Aus der DE 10 2004 012 948 A1 ist eine in ein Kupplungsgehäuse ragende Kupplungshauptnabe mit einem ebenfalls zweistückig ausgebildeten Nabenkörper bekannt. Der Nabenkörper besteht hier aus einer Außenhülse und einer Innenhülse, wobei die Innenhülse eine axiale Nut an ihrem Außenumfang aufweist. Durch diese Nut wird Kühlöl in das Kupplungsgehäuse geleitet. Zusätzlich wird Kühlöl in dem vom Nabenkörper und der äußeren Getriebeeingangswelle gebildeten Ringspalt geleitet. Diese Ausgestaltung erfordert ebenfalls eine gute Passung zwischen der Außenhülse und der Innenhülse und daher die schon angesprochenen Schleifarbeiten der Außenhülse an ihrem Innenumfang und der Innenhülse am Außenumfang, bevor die beiden Hülsen zusammengepresst werden. Da die äußere Getriebeeingangswelle an dem Innenumfang der Innenhülse gelagert ist, muss der Lagersitz am Innenumfang der Innenhülse nach dem Zusammenfügen von der Außenhülse und der Innenhülse nochmals mechanisch bearbeitet werden. Der damit verbundene Arbeitsaufwand ist daher sehr groß und mit hohen Kosten verbunden.

Im Dokument WO 2008/062652 A1 ist eine Doppelkupplung beschrieben. Die Doppelkupplung weist zwei voneinander unabhängige Ölkanäle auf, wobei zu einer ersten Kupplung Schmieröl durch den ersten Ölkanal und zu einer zweiten Kupplung Schmieröl durch den zweiten Ölkanal gelangt. Ein Ölführungsbauteil ist auf seiner Innenseite an der Peripherie der Eingangswelle der Doppelkupplung befestigt. An seiner peripheren Seite sind einzelne Strukturbauteile für die Aufnahme der Kupplungsmechanik angeordnet.

Das Dokument FR 2 871 209 betrifft eine Drehmomentübertragungsvorrichtung für einen parallelen Hybridantrieb, mit einer ersten und einer zweiten nass laufenden Kupplung. Auf einer Getriebeeingangswelle ist ein sich axial erstreckender Tubus drehfest aufgenommen, der drehbar ein Zwischenteil mit einer Nabe trägt. Der Tubus ist mit Fluidkanälen zur Verteilung eines Schmier- und Kühlungsfluids versehen. Das drehbare Zwischenteil ist vom Rotor des Elektroantriebs in Bewegung versetzbar, indem axial orientierte Zähne in komplementäre Ausnehmungen einer Wandung des Zwischenteils eingreifen. Die Nabe des Zwischenteils weist im Wesentlichen radial orientiere Durchgänge für das Schmier- und Kühlungsfluid auf.

Im Dokument FR 2 148 862 ist eine hydraulische Kupplung mit einem einteiligen Kranz auf einer Abtriebswelle offenbart, welcher die inneren Lamellen der Kupplungsvorrichtung trägt. Die Ölzufuhr erfolgt durch einen Kanal in einer Antriebswelle in den Innenraum des Kupplungsgehäuses hinein. Der Kranz weist radial orientierte Löcher in seiner Wand auf, welche einen Raumteil für die Kupplungslamellen und einen Raumteil für eine Rückstellfeder der Kupplung voneinander trennt. Durch diese Löcher strömt das Öl zu den Kupplungslamellen, um dann durch eine Führung zum Reservoir zurückzugelangen.

Das Dokument WO 2008/092426 A2 offenbart eine Anfahrkupplung mit einer Antriebsnabe und einer Abtriebsnabe. Eine Ölzufuhr von Kühl- und Fliehöl erfolgt in einigen Ausführungsbeispielen unter anderem durch Kanäle in einer Getriebewelle und durch im Wesentlichen radial orientierte Durchgänge in der Antriebsnabe.

Im Dokument AT 386 870 ist eine Kupplung mit gekühlten Reibkörpern dargestellt. Radial innerhalb einer mehrteiligen Kupplungsnabe ist ein mit einer durch eine Antriebswelle verlaufende Zuleitung verbundener Schmieröl-Vorratsbehälter angeordnet, wobei das Schmieröl auch als Kühlmittel dient. Das Schmieröl gelangt durch eine Ringnut der Kupplungsnabe in Verteilerbohrungen und von diesen über Querbohrungen zu den Reibkörpern.

Der Erfindung liegt daher die Aufgabe zugrunde, eine Kupplungshauptnabe bzw. eine Doppelkupplung derart auszugestalten und weiterzubilden, so dass der damit verbundene Herstellungsaufwand wesentlich verringert ist.

Die zuvor aufgezeigte Aufgabe wird nun für die Kupplungshauptnabe bzw. für die Doppelkupplung dadurch gelöst, dass die Kupplungshauptnabe einstückig ausgebildet ist und der einstückige Nabenkörper mindestens eine sich von mindestens einer Eintrittsöffnung zu mindestens einer Austrittsöffnung erstreckende Kühlmittelleitung zur Kühlmittelversörgung der Kupplung, insbesondere der Doppelkupplung, aufweist. Durch die einstückige Ausgestaltung der Kupplungshauptnabe bzw. des Nabenkörpers kann eine Presspassung, das Fügen und die anschließende mechanische Bearbeitung des Nabenkörpers entfallen. Zudem ist die Teilezahl der Kupplungshauptnabe verringert. Der Bauaufwand der Kupplungshauptnabe ist durch die Integration der Kühlmittelleitung in den Nabenkörper reduziert. Die eingangs genannten Nachteile sind daher vermieden und entsprechende Vorteile erzielt, insbesondere ist der Herstellungsaufwand und die damit verbundenen Kosten verringert.

Es gibt nun eine Vielzahl von Möglichkeiten, die erfindungsgemäße Kupplungshauptnabe bzw. die erfindungsgemäße Doppelkupplung in vorteilhafter Art und Weise auszugestalten und weiterzubilden. Hierfür darf zunächst auf die den Patentansprüchen 1 und 17 nachgeordneten Ansprüche verwiesen werden. Im Folgenden wird nun eine bevorzugte Ausgestaltung der Erfindung anhand der folgenden Zeichnung und der zugehörigen Beschreibung näher erläutert. In der Zeichnung zeigt:
- Fig. 1: in einer schematischen Darstellung die Doppelkupplung in teilweise geschnittener Darstellung von der Seite, allerdings nur hälftig dargestellt,
- Fig. 2: in schematisch perspektivischer Darstellung eine Kupplungshauptnabe,
- Fig. 3: in anderer schematisch perspektivischer Darstellung die Kupplungshauptnabe aus Fig. 2,
- Fig. 4: in schematisch perspektivischer Darstellung einen Ausgleichskolben, und
- Fig. 5: in schematisch perspektivischer Darstellung ein Laufelement.

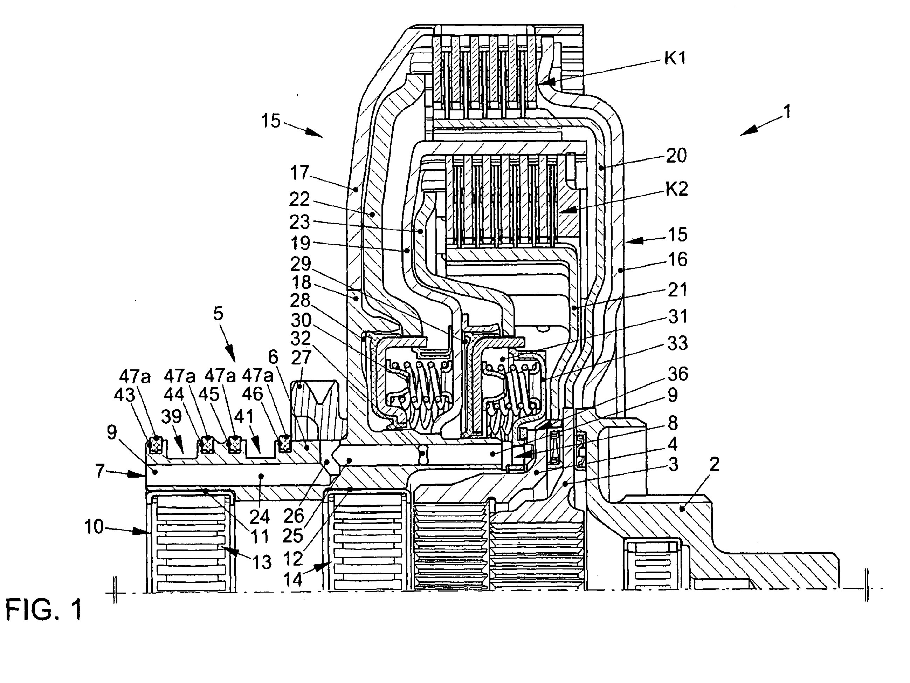

Die in Fig. 1 dargestellte Doppelkupplung 1 wird insbesondere für ein Getriebe eines Kraftfahrzeuges verwendet, nämlich vorzugsweise für ein automatisches oder automatisiertes, hier allerdings nicht im Einzelnen dargestelltes Doppelkupplungsgetriebe.

Gut ersichtlich ist eine erste Reibkupplung K1 und eine zweite Reibkupplung K2. Die erste Reibkupplung K1 ist mit einer nicht im Einzelnen dargestellten Motorwelle verbindbar. Erkennbar in Fig. 1 ist rechts unten die Kupplungseingangswelle 2, die wiederum mit einer Motorwelle entsprechend verbindbar ist. Andererseits sind die erste und zweite Reibkupplung K1 und K2 mit jeweils einer Getriebeeingangswelle, vzw. eines Doppelkupplungsgetriebes verbindbar. Dargestellt ist in Fig. 1 hier nur teilweise die erste Getriebeeingangswelle 3 und die zweite Getriebeeingangswelle 4 bzw. die entsprechenden Verbindungselemente 3 und 4.

Die Reibkupplungen K1 und K2 sind als nasslaufende Reibkupplungen K1 und K2 ausgestaltet, wobei die Reibkupplungen K1 und K2 vzw. nicht näher bezeichnete Lamellenpakete aus abwechselnd aufeinander geschichteten und nicht näher bezeichneten Außenlamellen und nicht näher bezeichneten Innenlamellen aufweisen. Die Außenlamellen sind über eine Kupplungshauptnabe 5 mit der Motoreingangswelle 2 funktional wirksam drehfest verbunden, dass heißt der Kraftfluss wird über die Kupplungshauptnabe 5 zu den Reibkupplungen K1 und K2 geleitet. Die Innenlamellen der beiden Reibkupplungen K1 und K2 sind jeweils funktional wirksam mit den Getriebeeingangswellen 2 und 3 verbunden.

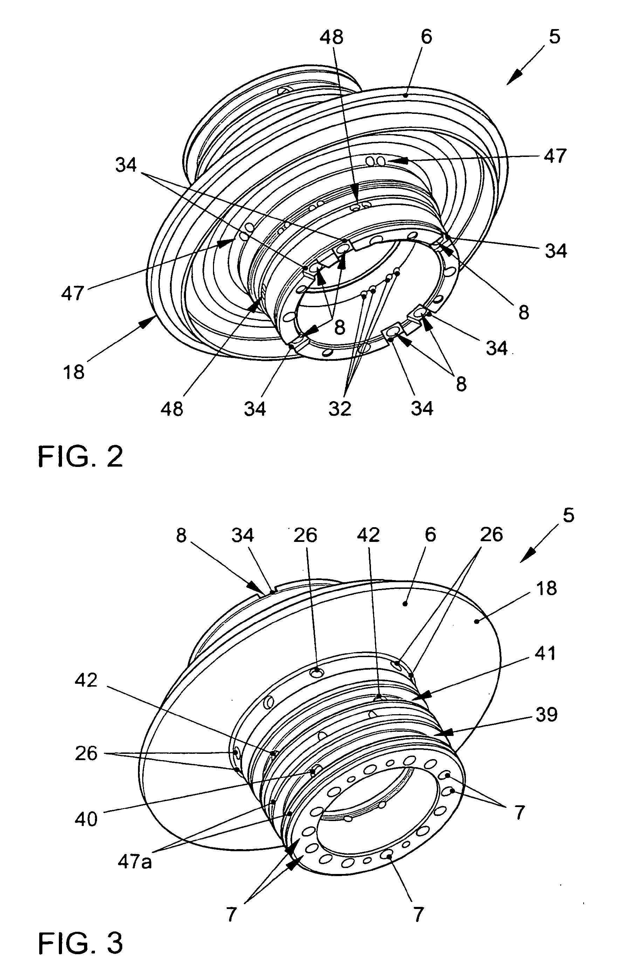

Die eingangs beschriebenen Nachteile sind nun dadurch vermieden, dass die Kupplungshauptnabe 5 einstückig ausgebildet ist und der einstückige Nabenkörper 6 mindestens eine sich von mindestens einer Eintrittsöffnung 7 zu mindestens einer Austrittsöffnung 8 erstreckende Kühlmittelleitung 10 zur Kühlmittelversorgung der Doppelkupplung 1 aufweist. Wie bereits eingangs erläutert worden ist, hat die einstückige Ausbildung der Kupplungshauptnabe 5 bzw. des Nabenkörpers 6 den Vorteil, dass eine Presspassung, ein Fügen und die anschließende mechanische Bearbeitung des Nabenkörpers 6 entfallen. Zudem ist die Teilezahl der Kupplungshauptnabe 5 verringert. Der Bauaufwand der Kupplungshauptnabe 5 ist durch Integration der Kühlmittelleitung 9 in den Nabenkörper 6 reduziert. Bevor nun die Kupplungshauptnabe 5 anhand der Fig. 2 und 3 erläutert wird, wird auf die Bauteile der Doppelkupplung 1 noch näher anhand der Fig. 1 eingegangen:

Der Nabenkörper 6 weist eine im Wesentlichen zylindrische Aufnahme 10 für die beiden nicht dargestellten Getriebeeingangswellen auf. Das erste Verbindungselement 3 ist mit einer nicht näher bezeichneten Innenverzahnung versehen, wobei in diese Innenverzahnung die nicht dargestellte erste, innere Getriebeeingangswelle mit einer Außenverzahnung eingreifen kann. Entsprechend weist das zweite Verbindungselement 4 eine nicht näher bezeichnete Innenverzahnung auf, in die die nicht dargestellte zweite, insbesondere als Hohlwelle ausgebildete, äußere Getriebeeingangswelle mit einer entsprechenden Außenverzahnung eingreifen kann. Die Verbindungselemente 3 und 4 - und im montierten Zustand auch die Getriebeeingangswellen - sind konzentrisch zur Kupplungshauptnabe 5 angeordnet und werden vom Nabenkörper 6 umfänglich umschlossen. Der Nabenkörper 6 weist an seinem Innenumfang in der Aufnahme 10 zur Lagerung der nicht dargestellten äußeren, zweiten Getriebeeingangswelle insbesondere mindestens einen Lagersitz vzw. zwei axial beabstandete Lagersitze 11 und 12 auf, in die Lager 13 und 14 eingesetzt werden bzw. einsetzbar sind.

Die Kupplungseingangswelle 2 ist ebenfalls konzentrisch zur nicht näher bezeichneten Drehachse der Kupplungshauptnabe 5 angeordnet. Die Kupplungseingangswelle 2 ist drehfest über ein Gehäuse 15 mit der Kupplungshauptnabe 5 verbunden. Das Gehäuse 15 besteht aus einer mit der Kupplungseingangswelle 2 drehfest verbundenen Mitnehmerscheibe 16 und einem ersten Außenlamellenträger 17, wobei der Nabenkörper 6 einen umlaufenden Kragen 18 aufweist, an dem der erste Außenlamellenträger 17 befestigt, vzw. verschweißt ist. Motorseitig des Kragens 18 ist an dem Nabenkörper 6 beabstandet zum ersten Außenlamellenträger 17 ein zweiter Außenlamellenträger 19 befestigt. Am Nabenkörper 6 sind im Allgemeinen mindestens ein Lamellenträger, insbesondere die beiden Außenlamellenträger 17 und 19 befestigt.

Der erste Außenlamellenträger 17 trägt nicht näher bezeichnete, der ersten Reibkupplung K1 zugehörige Außenlamellen und der zweite Außenlamellenträger 19 trägt der zweiten Reibkupplung K2 zugeordnete, nicht näher bezeichnete Außenlamellen. Die Außenlamellen der beiden Reibkupplungen K1 und K2 sind jeweils abwechselnd mit nicht näher bezeichneten, der jeweiligen Reibkupplung K1 oder K2 zugeordneten Innenlamellen zu Lamellenpaketen geschichtet. Die nicht näher bezeichneten Innenlamellen sind wiederum funktional wirksam jeweils mit den nicht dargestellten Getriebeeingangswellen bzw. den Verbindungselementen 3 oder 4 über einen ersten Innenlamellenträger 20 bzw. einen zweiten Innenlamellenträger 21 verbunden.

Zur Kühlung und Kühlmittelversorgung der Doppelkupplung 1 und insbesondere der Reibkupplungen K1 und K2 weist der Nabenkörper 6 mindestens eine Kühlmittelleitung 9 auf. Die Kühlmittelleitung 9 erstreckt sich im Wesentlichen in Axialrichtung des Nabenkörpers 6. Der Nabenkörper 6 weist an seiner getriebeseitigen Stirnseite die Eintrittsöffnung 7 und an der anderen, motorseitigen Stirnseite die Austrittsöffnung 8 auf. Die Kühlmittelleitung 9 weist einen ersten Abschnitt 24 und einen mit dem ersten Abschnitt 24 in Verbindung stehenden, zweiten Abschnitt 25 auf. Die Eintrittsöffnung 7 ist dem ersten Abschnitt 24 zugeordnet und dieser weist dabei vorzugsweise einen kleineren Querschnitt, insbesondere einen kleineren Durchmesser, als der zweite Abschnitt 25 auf. Der erste Abschnitt 24 liegt in Radialrichtung weiter innen als der zweite Abschnitt 25. Der zweite Abschnitt 25 mündet in der Austrittsöffnung 8. Diese beiden in Radialrichtung versetzten Abschnitte 24 und 25 sind über einen sich im Wesentlichen in Radialrichtung erstreckenden Verbindungsabschnitt 26 miteinander verbunden. Der Verbindungsabschnitt 26 erstreckt sich in Radialrichtung vom ersten Abschnitt 24 bis zum Außenumfang des Nabenkörpers 6. Der Verbindungsabschnitt 26 ist am Außenumfang des Nabenkörpers 6 mit einem Verschlusselement, vzw. einem Verschlussring 27 abdichtend verschlossen. In besonders bevorzugter Ausgestaltung der Erfindung sind der erste Abschnitt 24 und der zweite Abschnitt 25 als axiale Bohrungen und der Verbindungsabschnitt 26 als radiale Bohrung ausgeführt. Die Kühlmittelleitung 9 weist in Form der radialen Bohrung daher "eine Stufe" auf. Der Verbindungsabschnitt 26 bildet wenigstens zum Teil ein Totvolumen, in dem das nicht dargestellte Kühlmittel aufgrund der Fliehkraftwirkung bei Rotation der Kupplungshauptnabe gespeichert wird. Wenn der Kühlmittelstrom abgeschaltet wird, verbleibt dieses im Totvolumen gespeicherte Kühlmittel in der Kühlmittelleitung 9. Beim Wiedereinschalten des Kühlmittelstroms steht durch das gespeicherte Kühlmittel somit schneller ein Kühlmittelstrom in der Kühlmittelleitung 9 bereit, wodurch die Ansprechzeiten der Kühlmittelversorgung reduziert werden. In weiter bevorzugter Ausgestaltung der Erfindung ist der Nabenkörper 6 als Drehteil gefertigt.

Wie bereits ausgeführt worden ist, sind auf dem Nabenkörper 6 der erste Betätigungskolben 22 und der zweite Betätigungskolben 23 in Axialrichtung verschiebbar geführt. Dem ersten Betätigungskolben 22 ist dazu ein mit einem Druckmittel beaufschlagbarer, erster Arbeitsraum 28 zugeordnet. Der erste Arbeitsraum 28 ist getriebeseitig des ersten Betätigungskolbens 22 angeordnet. Auf der anderen Seite, d.h. motorseitig, des ersten Betätigungskolbens 22 ist ein erster Druckausgleichsraum 30 vorgesehen, wobei im ersten Druckausgleichsraum 30 eine nicht näher bezeichnete Federanordnung einerseits am ersten Betätigungskolben 22 und andererseits am zweiten Außenlamellenträger 19 abgestützt ist. Wenn der erste Arbeitsraum 28 mit einem Druckmittel beaufschlagt wird, wird die erste Federanordnung komprimiert und der erste Betätigungskolben 22 schließt die erste Reibkupplung K1. Bei Wegfall des Betätigungsdrucks im ersten Arbeitsraum 28 schiebt die erste Federanordnung den ersten Betätigungskolben 22 in seine Nulllage zurück und die erste Reibkupplung K1 wird wieder geöffnet. Der erste Druckausgleichsraum 30 ist über einen ersten Abzweig 32 mit der Kühlmittelleitung 9 verbunden. Der erste Abzweig 32 erstreckt sich vom Außenumfang des Nabenkörpers 6 bis zu dessen Innenumfang, könnte sich aber auch nur bis zum zweiten Abschnitt 25 erstrecken. Durch den ersten Abzweig 32 wird daher sowohl der erste Druckausgleichsraum 30 als auch die Aufnahme 10 insbesondere im Bereich der Verbindungselemente 3 und 4 mit Kühlmittel versorgt.

Dem zweiten Betätigungskolben 23 ist entsprechend ein mit dem Druckmittel beaufschlagbarer, zweiter Arbeitsraum 29 zugeordnet. Der zweite Arbeitsraum 29 ist getriebeseitig des zweiten Betätigungskolbens 23 vorgesehen und dort durch den zweiten Außenlamellenträger 19 begrenzt. Auf der anderen Seite des zweiten Betätigungskolbens 23, d.h. motorseitig, des zweiten Betätigungskolbens 23 ist ein zweiter Druckausgleichsraum 31 vorgesehen, wobei im zweiten Druckausgleichsraum 31 eine nicht näher bezeichnete, zweite Federanordnung einerseits am zweiten Betätigungskolben 23 und andererseits an einem Ausgleichskolben 33 abgestützt ist, wobei der Ausgleichskolben 33 drehfest mit dem Nabenkörper 6 verbunden ist. Wenn der zweite Arbeitsraum 29 mit dem Druckmittel beaufschlagt wird, wird die zweite Federanordnung komprimiert und der zweite Betätigungskolben 23 schließt die zweite Reibkupplung K2. Bei Wegfall des Betätigungsdrucks im zweiten Arbeitsraum 29 schiebt die zweite Federanordnung den zweiten Betätigungskolben 23 in seine Nulllage zurück und die zweite Reibkupplung K2 wird wieder geöffnet. Der zweite Druckausgleichsraum 31 ist mit der Kühlmittelleitung 9 verbunden. Dazu ist die mit den Austrittsöffnungen 8 versehene Stirnseite des Nabenkörpers 6 mit sich im Wesentlichen in Radialrichtung erstreckenden Nuten 34 versehen, wobei die Austrittsöffnungen 8 in die Nuten 34, vzw. in die Nutböden, münden, was in Fig. 2 dargestellt ist.

Aus Fig. 2 ist ferner ersichtlich, dass der Nabenkörper 6 in dieser Ausgestaltung vzw. mehrere Kühlmittelleitungen 9 aufweist und dass die Abzweige 32 bis zum Innenumfang des Nabenkörpers 6 reichen. Jeder Eintrittsöffnung 7 ist vzw. genau eine Austrittsöffnung 8 und eine sich im Wesentlichen in Axialrichtung erstreckende Kühlmittelleitung 9 zugeordnet. Die Anzahl der Kühlmittelleitungen 9 kann je nach Art der Doppelkupplung 1 ausgewählt werden.

In Fig. 3 sind an der einen Stirnseite des Nabenkörpers 6 die mit den Austrittsöffnungen 8 über die hier nicht dargestellten, im Inneren des Nabenkörpers 6 sich erstreckenden Kühlmittelleitungen 9 verbundenen Eintrittsöffnungen 7 sowie die Verbindungsabschnitte 26 gut erkennbar.

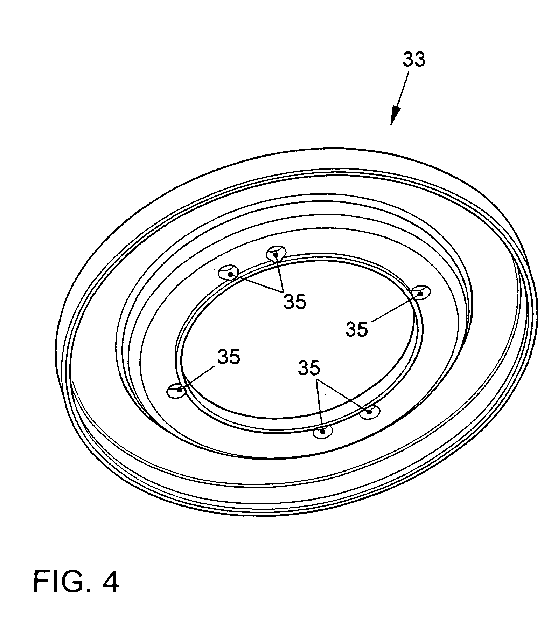

Im Folgenden wird auf die Fig. 1 und 4 Bezug genommen. An der motorseitigen Stirnseite des Nabenkörpers 6 ist der Ausgleichskolben 33 angeordnet, der zum einen zur Abstützung der zweiten Federanordnung im zweiten Druckausgleichsraum 31 dient und zum anderen zur Weiterleitung des Kühlmittels vorgesehen ist. Der Ausgleichskolben 33 weist dazu mehrere Durchbrüche 35 auf. Die Durchbrüche 35 sind im montierten Zustand des Ausgleichskolbens 33 insbesondere fluchtend mit den an der Stirnseite des Nabenkörpers 6 angeordneten Austrittsöffnungen 8 zur Durchleitung des Kühlmittels angeordnet.

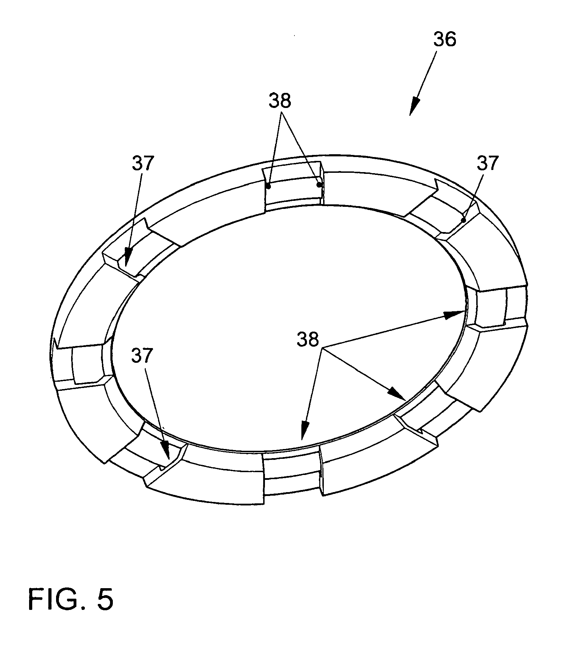

Motorseitig des Ausgleichskolbens 33 ist ein Laufelement 36 angeordnet, das in Fig. 1 und im Detail in Fig. 5 dargestellt ist. Das mittelbar an der motorseitigen Stirnseite des Nabenkörpers 6 angeordnete Laufelement 36 dient zur radialen Verteilung des Kühlmittels im Kupplungsgehäuse 15. Das Laufelement 36 ist zwischen dem zweiten Verbindungselement 4 und der motorseitigen Stirnseite des Nabenkörpers 6 bzw. dem Ausgleichskolben 33 angeordnet. Das Laufelement 36 ist am Ausgleichskolben 33 abgestützt.

In der in Fig. 1 gezeigten Ausgestaltung der Erfindung ist zwischen der Kupplungshauptnabe 5 und dem Laufelement 36 ein Zwischenelement, nämlich vzw. der der Reibkupplung K2 zugeordneter Ausgleichskolben 33, angeordnet. Wenn ein Zwischenelement eingesetzt wird, weist das Zwischenelement vzw. die sich in Axialrichtung erstreckenden Durchbrüche 35 zur Durchleitung des Kühlmittels auf. Andere Ausgestaltungen der Erfindungen müssen nicht unbedingt ein Zwischenelement aufweisen. In einer anderen Ausgestaltung der Erfindung liegt das Laufelement 36 bspw. unmittelbar an der Stirnseite des Nabenkörpers 36 ohne Zwischenlage des Ausgleichskolbens 33 an.

Das Laufelement 36 ist im Wesentlichen ringförmig bzw. als Laufring ausgestaltet. Das Laufelement 36 weist auf seiner einen Seite einen ringförmigen Kanal 37 auf zur Aufnahme des an der motorseitigen Stirnseite des Nabenkörpers 6 aus den Austrittsöffnungen 8 austretenden Kühlmittels. Auf der anderen Seite des Laufelements 36 erstrecken sich vzw. zum Außenumfang und ggf. zum Innenumfang des Laufelements 36 hin randoffene Verteilerkanäle 38 zum Verteilen des Kühlmittels im Kupplungsgehäuse 15. Der ringförmige Kanal 37 steht mit den Verteilerkanälen 38 in Verbindung. Die Verteilerkanäle 38 sind durch sich in Radialrichtung erstreckende Verteilernuten 38 gebildet, wobei die Verteilernuten 38 vzw. in Umfangsrichtung insbesondere gleichmäßig beabstandet sind. Der Kanal 37 ist auf der einen Seite des Laufelements 36 vorgesehen und die Verteilerkanäle 38 sind auf der anderen Seite des Laufelements 36 vorgesehen. Der Kanal 37 und die Verteilerkanäle 38 können jedoch auch auf der gleichen Seite des Laufelements 36 vorgesehen sein. Das Laufelement 36 trägt vzw. keine axiale Lasten, da die axiale Lage des Nabenkörpers 6 über das Gehäuse 15 an der Motorwelle 2 festgelegt ist. Vzw. ist das Laufelement 36 aus Kunststoff gefertigt, was preisgünstiger als bspw. eine Fertigung des Laufelements 36 aus Metall sein kann. Als Kühlmittel wird vzw. Kühlöl oder ölartige Substanzen benutzt, die vzw. die Bauteile der Doppelkupplung 1 kühlen und/oder schmieren.

Die Kühlmittelleitungen 9 versorgen den ersten und den zweiten Druckausgleichsraum 30 und 32 sowie die Aufnahme 10, insbesondere den motorseitigen Bereich der Aufnahme 10, in dem die Verbindungselemente 3 und 4 angeordnet sind. Vom Laufelement 36 wird das Kühlmittel zu der zweiten Reibkupplung K2 geschleudert. Der zweite Innenlamellenträger 21 und der zweite Außenlamellenträger 19 weisen vorzugsweise Durchgänge für das Kühlmittel auf, so dass das Kühlmittel weiter nach außen zur ersten Reibkupplung K1 gelangen kann, da die erste , Reibkupplung K1 vzw. radial weiter außen als die zweite Reibkupplung K2 angeordnet ist.

Im Folgenden wird auf die Fig. 1, 2 und 3 Bezug genommen. Der Nabenkörper 6 weist zusätzlich zur Kühlmittelleitung 9 mindestens eine im Einzelnen nicht näher dargestellte Druckmittelleitung auf zur hydraulischen Betätigung der auf die Reibkupplungen K1 und K2 wirkenden ersten und zweiten Betätigungskolben 22 und 23. Der Nabenkörper 6 weist mehrere sich von mehreren, ersten Versorgungsöffnungen 40 zu jeweils zwei, ersten Arbeitsraumöffnungen 47 erstreckende, nicht dargestellte Druckmittelleitungen zur hydraulischen Betätigung von dem der ersten Reibkupplung K1 zugeordneten Betätigungskolben 22 auf. Der Nabenkörper 6 weist ferner mehrere sich von mehreren, zweiten Versorgungsöffnungen 42 zu jeweils zwei, zweiten Arbeitsraumöffnungen 48 erstreckende, nicht dargestellte, zweite Druckmittelleitungen zur Versorgung des zweiten Arbeitsraums 29 und damit zur hydraulischen Betätigung von dem der zweiten Reibkupplung K2 zugeordneten Betätigungskolben 23 auf.

In dem Nabenkörper 6 sind damit zwei verschiedene Ausgestaltungen von Druckmittelleitungen integriert. Die nicht näher dargestellte erste Druckmittelleitung mündet in den ersten Arbeitsraum 28 und die nicht näher dargestellte zweite Druckmittelleitung mündet in den zweiten Arbeitsraum 29. Zur Druckmittelversorgung des ersten Arbeitsraums weist der Nabenkörper 6 getriebeseitig der beiden Arbeitsräume 28 und 29 vzw. eine erste, äußere Ringnut 39 auf, wobei in der ersten Ringnut 39 eine erste Versorgungsöffnung 40 der ersten Druckmittelleitung vorgesehen ist. Zur Druckmittelversorgung des zweiten Arbeitsraums 30 weist der Nabenkörper 6 getriebeseitig der beiden Arbeitsräume 28 und 29 vzw. eine zweite, äußere Ringnut 41 auf, wobei in der zweiten Ringnut 41 mindestens eine zweite Versorgungsöffnung 42 der zweiten Druckmittelleitung vorgesehen ist.

Der Nabenkörper 6 weist in Axialrichtung beidseitig neben der ersten Ringnut 39 angeordnete Dichtungsnuten 43 und 44 auf, wobei in die Dichtungsnuten 43 und 44 Dichtungselemente 47a, vzw. Dichtungsringe eingesetzt oder einsetzbar sind. Der Nabenkörper 6 weist entsprechend in Axialrichtung beidseitig neben der zweiten Ringnut 41 angeordnete Dichtungsnuten 45 und 46 auf, wobei in die Dichtungsnuten 45 und 46 Dichtungselemente 47a, vzw. Dichtungsringe eingesetzt oder einsetzbar sind. Als Druckmittel wird vorzugsweise ein Hydrauliköl verwendet Die Druckmittelleitungen erstrecken sich vorzugsweise im wesentlichen in Axialrichtung und können mit sich schräg oder in Radialrichtung erstreckenden Versorgungs- und Auslassabschnitten am Außenumfang des Nabenkörpers 6 versehen sein.

### Bezugszeichenliste

- 1: Doppelkupplung
- 2: Kupplungseingangswelle
- 3: erste Getriebeeingangswelle
- 4: zweite Getriebeeingangswelle
- 5: Kupplungshauptnabe
- 6: Nabenkörper
- 7: Eintrittsöffnungen
- 8: Austrittsöffnungen
- 9: Kühlmittelleitung
- 10: Aufnahme
- 11: Lagersitz
- 12: Lagersitz
- 13: Lager
- 14: Lager
- 15: Kupplungsgehäuse
- 16: Mitnehmerscheibe
- 17: erster Außenlamellenträger
- 18: Kragen
- 19: zweiter Außenlamellenträger
- 20: erster Innenlamellenträger
- 21: zweiter Innenlamellenträger
- 22: erster Betätigungskolben
- 23: zweiter Betätigungskolben
- 24: erste axiale Bohrung
- 25: zweite axiale Bohrung
- 26: radiale Verbindungsbohrung
- 27: Verschlussring
- 28: erster Arbeitsraum
- 29: zweiter Arbeitsraum
- 30: erster Druckausgleichsraum
- 31: zweiter Druckausgleichsraum
- 32: Abzweig
- 33: Ausgleichskolben
- 34: Nuten
- 35: Durchbrüche
- 36: Laufelement
- 37: ringförmiger Kanal
- 38: Verteilerkanal
- 39: erste Ringnut
- 40: erste Versorgungsöffnung
- 41: zweite Ringnut
- 42: zweite Versorgungsöffnung
- 43: Dichtungsnut
- 44: Dichtungsnut
- 45: Dichtungsnut
- 46: Dichtungsnut
- 47: erste Arbeitsraumöffnungen
- 47a: Dichtungselemente
- 48: zweite Arbeitsraumöffnungen
- 49: Dichtelement

- K1: erste Reibkupplung
- K2: zweite Reibkupplung

## Patentansprüche

1. Kupplungshauptnabe (5) für eine Kupplung, zum Übertragen des Kraftflusses zwischen einer Motorwelle (2) und mindestens einer Reibkupplung (K1, K2), wobei ein Nabenkörper (6) vorgesehen ist, **dadurch gekennzeichnet, dass** die Kupplungshauptnabe (5) einstückig ausgebildet ist und der einstückige Nabenkörper (6) mindestens eine sich von mindestens einer Eintrittsöffnung (7) zu mindestens einer Austrittsöffnung (8) im Wesentlichen in Axialrichtung des Nabenkörpers (6) erstreckende Kühlmittelleitung (9) zur Kühlmittelversorgung der Kupplung (1) aufweist.

2. Kupplungshauptnabe nach Anspruch 1, **dadurch gekennzeichnet, dass** der Nabenkörper (6) zusätzlich mindestens eine Druckmittelleitung aufweist zur hydraulischen Betätigung von auf die Reibkupplungen (K1, K2) wirkenden Betätigungskolben (22, 23).

3. Kupplungshauptnabe nach einem der vorstehenden Ansprüche, **dadurch gekennzeichnet, dass** die Kühlmittelleitungen (9) einen ersten Abschnitt (24) und einen mit dem ersten Abschnitt in Verbindung stehenden, zweiten Abschnitt (25) aufweisen, wobei vzw. der Querschnitt des ersten Abschnitts kleiner als der Querschnitt des zweiten Abschnitts ist und wobei die Eintrittsöffnungen (7) dem ersten Abschnitt (24) zugeordnet sind und die Austrittsöffnungen (8) dem zweiten Abschnitt (25) zugeordnet sind.

4. Kupplungshauptnabe nach einem der vorstehenden Ansprüche, **dadurch gekennzeichnet, dass** der erste Abschnitt (24) und der zweite Abschnitt (25) radial voneinander beabstandet sind und sich im Wesentlichen in Axialrichtung erstrecken sowie über einen sich im Wesentlichen in Radialrichtung erstreckenden Verbindungsabschnitt (26) miteinander verbunden sind.

5. Kupplungshauptnabe nach einem der vorstehenden Ansprüche, **dadurch gekennzeichnet, dass** die mit den Austrittsöffnungen (8) versehene Stirnseite des Nabenkörpers (6) mit sich in Radialrichtung erstreckenden Nuten (34) versehen ist, wobei vzw. zumindest einige der Austrittsöffnungen (8) in die Nutböden münden.

6. Kupplungshauptnabe nach einem der vorstehenden Ansprüche, **dadurch gekennzeichnet, dass** der Nabenkörper (6) mindestens eine äußere Ringnut (39, 41) aufweist, in die jeweils eine dem entsprechenden Arbeitsraum (28, 29) zugeordnete Druckmittelleitung mit ihrer bzw. ihren Versorgungsöffnungen (40, 42) mündet.

7. Kupplungshauptnabe nach einem der vorstehenden Ansprüche, **dadurch gekennzeichnet, dass** der Nabenkörper (6) mit in Axialrichtung beidseitig neben der Ringnut (39, 41) angeordneten Dichtungsnuten (43, 44, 45, 46) versehen ist, wobei in die Dichtungsnut Dichtungselemente (47) eingesetzt oder einsetzbar sind.

8. Doppelkupplung (1) mit einem Kupplungsgehäuse (15), einer ersten und zweiten Reibkupplung (K1, K2), wobei die beiden Reibkupplungen (K1, K2) einerseits mit einer Motorwelle (2) und andererseits jeweils mit einer Getriebeeingangswelle (3, 4) verbindbar sind, und mit einer im Kraftfluss zwischen der Motorwelle (2) und den Reibkupplungen (K1, K2) angeordneten Kupplungshauptnabe (5) mit einem Nabenkörper (6), **dadurch gekennzeichnet, dass** die Kupplungshauptnabe (5) einstückig ausgebildet ist und der einstückige Nabenkörper (6) mindestens eine sich von mindestens einer Eintrittsöffnung (7) zu mindestens einer Austrittsöffnung (8) im Wesentlichen in Axialrichtung des Nabenkörpers (6) erstreckende Kühlmittelleitung (9) zur Kühlmittelversorgung der Doppelkupplung (1) aufweist.

9. Doppelkupplung nach Anspruch 8, **dadurch gekennzeichnet, dass** vom zweiten Abschnitt (25) sich im Wesentlichen in Radialrichtung erstreckende Abzweige (32) abgehen zur Kühlmittelversorgung von einem dem Betätigungskolben (22) zugeordneten Druckausgleichsraum (30) und/oder zur Kühlmittelversorgung der Aufnahme (10).

10. Doppelkupplung nach einem der vorstehenden Ansprüche 8 und 9, **dadurch gekennzeichnet, dass** der Nabenkörper (6) mindestens eine sich von mindestens einer Versorgungsöffnung (40, 42) zu mindestens einer Arbeitsraumöffnung (47, 48) erstreckende Druckmittelleitung zur hydraulischen Betätigung von den Reibkupplungen (K1, K2) zugeordneten Betätigungskolben (22, 23) aufweist.

11. Doppelkupplung nach einem der vorstehenden Ansprüche 8 bis 10, **dadurch gekennzeichnet, dass** der Nabenkörper (6) eine erste Druckmittelleitung zur Druckmittelbeaufschlagung eines ersten Arbeitsraums (28) und eine zweite Druckmittelleitung zur Druckmittelbeaufschlagung eines zweiten Arbeitsraums (29) aufweist.

12. Doppelkupplung nach einem der vorstehenden Ansprüche 8 bis 11, **dadurch gekennzeichnet, dass** unmittelbar oder mittelbar an der motorseitigen und mit den Austrittsöffnungen (8) versehenen Stirnseite ein Laufelement (36) angeordnet ist zur radialen Verteilung des Kühlmittels in das Kupplungsgehäuse (5).

13. Doppelkupplung nach einem der vorstehenden Ansprüche 8 bis 12, **dadurch gekennzeichnet, dass** das Laufelement (36) einen ringförmigen Kanal (37) aufweist zur Aufnahme des an der Stirnseite des Nabenkörpers (6) aus den Austrittsöffnungen (8) austretenden Kühlmittels wobei das Laufelement (36) sich im Wesentlichen in Radialrichtung erstreckende Verteilerkanäle (38) zum Verteilen des Kühlmittels im Kupplungsgehäuse (15) aufweist.

14. Doppelkupplung nach einem der vorstehenden Ansprüche 8 bis 13, **dadurch gekennzeichnet, dass** die Verteilerkanäle (38) durch sich in Radialrichtung erstreckende Verteilernuten gebildet sind, wobei die Verteilernuten vorzugsweise in Umfangsrichtung insbesondere gleichmäßig beabstandet sind.

15. Doppelkupplung nach einem der vorstehenden Ansprüche 8 bis 14, **dadurch gekennzeichnet, dass** zwischen der Kupplungshauptnabe (5) und dem Laufelement (36) ein Zwischenelement, vorzugsweise ein einer der Reibkupplungen (K2) zugeordneter Ausgleichskolben (33), angeordnet ist, wobei das Zwischenelement sich in Axialrichtung erstreckende Durchbrüche zur Durchleitung des Kühlmittels aufweist.

## Claims

1. Main clutch hub (5) for a clutch, for transmitting the power flux between an engine shaft (2) and at least one friction clutch (K1, K2), wherein a hub body (6) is provided, **characterized in that** the clutch main hub (5) is embodied in a single piece, and the single-piece hub body (6) has at least one coolant line (9), extending from at least one inlet opening (7) to at least one outlet opening (8), essentially in the axial direction of the hub body (6), in order to supply the clutch (1) with coolant.

2. Main clutch hub according to Claim 1, **characterized in that** the hub body (6) additionally has at least one pressure medium line for hydraulically activating activation pistons (22, 23) which act on the friction clutches (K1, K2).

3. Main clutch hub according to one of the preceding claims, **characterized in that** the coolant lines (9) have a first section (12) and a second section (25) which is connected to the first section, wherein the cross section of the first section is preferably smaller than the cross section of the second section, and wherein the inlet openings (7) are assigned to the first section (24), and the outlet openings (8) are assigned to the second section (25).

4. Main clutch hub according to one of the preceding claims, **characterized in that** the first section (24) and the second section (25) are spaced apart from one another radially, extend essentially in the axial direction and are connected to one another via a connecting section (26) which extends essentially in the radial direction.

5. Main clutch hub according to one of the preceding claims, **characterized in that** the end face, provided with the outlet openings (8), of the hub body (6) is provided with grooves (34) extending the radial direction, wherein at least some of the outlet openings (8) preferably open into the groove floors.

6. Main clutch hub according to one of the preceding claims, **characterized in that** the hub body (6) has at least one outer annular groove (39, 41), into which a respective pressure medium line which is assigned to the corresponding working space (28, 29) opens with its supply opening or openings (40, 42).

7. Main clutch hub according to one of the preceding claims, **characterized in that** the hub body (6) is provided with sealing grooves (43, 44, 45, 46) which are arranged on both sides in the axial direction next to the annular groove (39, 41), wherein sealing elements (47) are inserted or can be inserted into the sealing groove.

8. Double clutch (1) having a clutch housing (15), a first and second friction clutch (K1, K2), wherein the two friction clutches (K1, K2) can be connected, on the one hand, to an engine shaft (2) and, on the other hand, in each case to a transmission input shaft (3, 4), and having a main clutch hub (5) which is arranged in the power flux between the engine shaft (2) and the friction clutches (K1, K2) and which has a hub body (6), **characterized in that** the main clutch hub (5) is embodied in one piece, and the single-piece hub body (6) has at least one coolant line (9) extending from at least one inlet opening (7) to at least one outlet opening (8), essentially in the axial direction of the hub body (6), in order to supply the double clutch (1) with coolant.

9. Double clutch according to Claim 8, **characterized in that** branches (32) which extend essentially in the radial direction, proceed from the second section (25) in order to supply coolant from a pressure equalization space (30) which is assigned to the activation piston (22) and/or to supply coolant to the receptacle (10).

10. Double clutch according to one of the preceding Claims 8 and 9, **characterized in that** the hub body (6) has at least one pressure medium line which extends from at least one supply opening (40, 42) to at least one working space opening (47, 48) and has the purpose of hydraulically activating activation pistons (22, 23) which are assigned to the friction clutches (K1, K2).

11. Double clutch according to one of the preceding Claims 8 to 10, **characterized in that** the hub body (6) has a first pressure medium line for applying pressure medium to a first working space (28), and a second pressure medium line for applying pressure medium to a second working space (29).

12. Double clutch according to one of the preceding Claims 8 to 11, **characterized in that** a runner element (36) is arranged directly or indirectly on the engine-side end face, provided with the outlet openings (8), in order to radially distribute the coolant into the clutch housing (5).

13. Double clutch according to one of the preceding Claims 8 to 12, **characterized in that** the runner element (36) has an annular duct (37) for holding the coolant which emerges from the outlet openings (8) at the end face of the hub body (6), wherein the runner element (36) has distributor ducts (38) which extend essentially in the radial direction and have the purpose of distributing the coolant in the clutch housing (15).

14. Double clutch according to one of the preceding Claims 8 to 13, **characterized in that** the distributor ducts (38) are formed by distributor grooves which extend in the radial direction, wherein the distributor grooves are preferably spaced apart in the circumferential direction, in particular uniformly.

15. Double clutch according to one of the preceding Claims 8 to 14, **characterized in that** an intermediate element, preferably an equalizing piston (33) which is assigned to one of the friction clutches (K2) is arranged between the main clutch hub (5) and the runner element (36), wherein the intermediate element has passages which extend in the axial direction and have the purpose of passing the coolant through.

## Revendications

1. Moyeu principal d'embrayage (5) pour un embrayage, pour le transfert du flux de forces entre un arbre de moteur (2) et au moins un embrayage à friction (K1, K2), un corps de moyeu (6) étant prévu, **caractérisé en ce que** le moyeu principal d'embrayage (5) est réalisé d'une seule pièce et le corps de moyeu d'une seule pièce (6) présente au moins une conduite de réfrigérant (9) pour l'alimentation en réfrigérant de l'embrayage (1), s'étendant essentiellement dans la direction axiale du corps de moyeu (6) depuis au moins une ouverture d'entrée (7) jusqu'à au moins une ouverture de sortie (8).

2. Moyeu principal d'embrayage selon la revendication 1, **caractérisé en ce que** le corps de moyeu (6) présente en outre au moins une conduite de fluide sous pression pour la commande hydraulique de pistons de commande (22, 23) agissant sur les embrayages à friction (K1, K2).

3. Moyeu principal d'embrayage selon l'une quelconque des revendications précédentes, **caractérisé en ce que** les conduites de réfrigérant (9) présentent une première portion (24) et une deuxième portion (25) en liaison avec la première portion, la section transversale de la première portion étant de préférence inférieure à la section transversale de la deuxième portion et les ouvertures d'entrée (7) étant associées à la première portion (24) et les ouvertures de sortie (8) étant associées à la deuxième portion (25).

4. Moyeu principal d'embrayage selon l'une quelconque des revendications précédentes, **caractérisé en ce que** la première portion (24) et la deuxième portion (25) sont espacées l'une de l'autre radialement et s'étendent essentiellement dans la direction axiale et sont également connectées l'une à l'autre par le biais d'une portion de connexion (26) s'étendant essentiellement dans la direction radiale.

5. Moyeu principal d'embrayage selon l'une quelconque des revendications précédentes, **caractérisé en ce que** le côté frontal du corps de moyeu (6) pourvu des ouvertures de sortie (8) est pourvu de rainures (34) s'étendant dans la direction radiale, de préférence au moins certaines des ouvertures de sortie (8) débouchant dans les fonds de rainures.

6. Moyeu principal d'embrayage selon l'une quelconque des revendications précédentes, **caractérisé en ce que** le corps de moyeu (6) présente au moins une rainure annulaire extérieure (39, 41), dans laquelle débouche à chaque fois une conduite de fluide sous pression associée à l'espace de travail correspondant (28, 29) avec son ou ses ouvertures d'alimentation (40, 42).

7. Moyeu principal d'embrayage selon l'une quelconque des revendications précédentes, **caractérisé en ce que** le corps de moyeu (6) est pourvu de rainures d'étanchéité (43, 44, 45, 46) disposées dans la direction axiale de chaque côté à côté de la rainure annulaire (39, 41), des éléments d'étanchéité (47) étant insérés ou pouvant être insérés dans la rainure d'étanchéité.

8. Double embrayage (1) comprenant un boîtier d'embrayage (15), un premier et un deuxième embrayage à friction (K1, K2), les deux embrayages à friction (K1, K2) pouvant être connectés d'une part à un arbre de moteur (2) et d'autre part à chaque fois à un arbre d'entrée de transmission (3, 4), et un moyeu principal d'embrayage (5) disposé dans le flux de forces entre l'arbre de moteur (2) et les embrayages à friction (K1, K2) avec un corps de moyeu (6), **caractérisé en ce que** le moyeu principal d'embrayage (5) est réalisé d'une seule pièce et le corps de moyeu d'une seule pièce (6) présente au moins une conduite de réfrigérant (9) pour l'alimentation en réfrigérant du double embrayage (1) s'étendant essentiellement dans la direction axiale du corps de moyeu (6) depuis au moins une ouverture d'entrée (7) jusqu'à au moins une ouverture de sortie (8).

9. Double embrayage selon la revendication 8, **caractérisé en ce que** des dérivations (32) s'étendant essentiellement dans la direction radiale partent de la deuxième portion (25) en vue de l'alimentation en réfrigérant d'un espace d'équilibrage de la pression (30) associé aux pistons de commande (22) et/ou en vue de l'alimentation en réfrigérant du logement (10).

10. Double embrayage selon l'une quelconque des revendications 8 et 9, **caractérisé en ce que** le corps de moyeu (6) présente au moins une conduite de fluide sous pression s'étendant depuis au moins une ouverture d'alimentation (40, 42) jusqu'à au moins une ouverture d'espace de travail (47, 48) en vue de la commande hydraulique de pistons de commande (22, 23) associés aux embrayages à friction (K1, K2).

11. Double embrayage selon l'une quelconque des revendications 8 à 10, **caractérisé en ce que** le corps de moyeu (6) présente une première conduite de fluide sous pression pour la sollicitation en fluide sous pression d'un premier espace de travail (28) et une deuxième conduite de fluide sous pression pour la sollicitation en fluide sous pression d'un deuxième espace de travail (29).

12. Double embrayage selon l'une quelconque des revendications 8 à 11, **caractérisé en ce qu'**un élément de roulement (36) est disposé directement ou indirectement sur le côté frontal du côté du moteur et pourvu des ouvertures de sortie (8) en vue de la répartition radiale du réfrigérant dans le boîtier d'embrayage (15).

13. Double embrayage selon l'une quelconque des revendications 8 à 12, **caractérisé en ce que** l'élément de roulement (36) présente un canal annulaire (37) pour recevoir le réfrigérant sortant au niveau du côté frontal du corps de moyeu (6) hors des ouvertures de sortie (8), l'élément de roulement (36) présentant des canaux de distribution (38) s'étendant essentiellement dans la direction radiale pour répartir le réfrigérant dans le boîtier d'embrayage (15).

14. Double embrayage selon l'une quelconque des revendications 8 à 13, **caractérisé en ce que** les canaux de distribution (38) sont formés par des rainures de distribution s'étendant dans la direction radiale, les rainures de distribution étant de préférence espacées dans la direction périphérique, notamment de manière uniforme.

15. Double embrayage selon l'une quelconque des revendications précédentes 8 à 14, **caractérisé en ce qu'**entre le moyeu principal d'embrayage (5) et l'élément de roulement (36), est disposé un élément intermédiaire, de préférence un piston d'équilibrage (33) associé à l'un des embrayages à friction (K2), l'élément intermédiaire présentant des orifices s'étendant dans la direction axiale pour guider le réfrigérant.
